# EUROPÄISCHE PATENTSCHRIFT

(11) **EP 1 936 765 B1**
(45) Veröffentlichungstag und Bekanntmachung des Hinweises auf die Patenterteilung: **06.11.2013**
(21) Anmeldenummer: 07019497.2
(22) Anmeldetag: 05.10.2007
(51) Int. Cl.: H02G 3/14

(54) **Elektrisches/elektronisches Installationsgerät**
Electric/electronic installation device
Appareil d'installation électrique/électronique

(30) Priorität: 20.12.2006 DE 102006060231
(43) Veröffentlichungstag der Anmeldung: 25.06.2008
(73) Patentinhaber: Berker GmbH & Co. KG, 58579 Schalksmühle (DE)
(72) Erfinder: Diegmann, Rolf Dieter, Dipl.-Ing., 58579 Schalksmühle (DE)

(56) Entgegenhaltungen:
- EP-A1- 1 022 833
- EP-A1- 1 675 235
- DE-U1- 29 901 689

## Beschreibung

Die Erfindung betrifft ein elektrisches/elektronisches Installationsgerät mit einem Träger gemäß der Oberbegriffe der beiden Hauptansprüche.

Derartige elektrische/elektronische Installationsgeräte, wie z. B. Schutzkontaktsteckdosen, Schalter, Taster, Bewegungsmelder, Orientierungslichter usw. sind üblicherweise mit einem Träger versehen damit eine sichere und positionsgerechte Installation gewährleistet ist. Oftmals sind solche Träger als Tragringe oder Tragplatten ausgeführt. Über den Träger werden die elektrischenlelektronischen Installationsgeräte z. B. an Aufputz- oder Unterputzinstallationsdosen, Kabelkanälen, usw. befestigt. Die Träger weisen zur normgerechten Installation ein Kantenmaß von 71 mm auf.

Durch die DE 10 2004 024 093 A1 und die DE 198 54 584 B4 sind dem Oberbegriff des Hauptanspruches entsprechend ausgebildete elektrische/elektronische Installationsgeräte bekannt geworden, welche zur sicheren und positionsgerechten Installation mit einem Träger versehen sind. Werden mehrere Installationsgeräte in einer sog. Gerätekombination installiert, kommen diese mit ihren einander zugeordneten Kantenbereichen aneinander zur Anlage, so dass normalerweise eine sichere und positionsgerechte Installation gewährleistet ist. Bei schwierigen Installationsbedingungen reicht aber eine derartige Zuordnung nicht immer aus, insbesondere wenn dauerhaft und sicher eine besonders exakte Ausrichtung mehrerer Installationsgeräte bzw. Träger untereinander erforderlich ist.

Zudem ist durch die EP 1 675 235 A1 ein elektrisches/elektronisches Installationsgerät bekannt geworden, dessen am Träger vorhandene Koppelelemente in ihrer Wirkstellung zur Kopplung mit einem weiteren Träger formschlüssig in zugeordnete Ausnehmungen dieses weiteren Trägers eingreifen.

Außerdem ist durch die DE 299 01 689 U1 ein elektrisches Installationsgerät zur Unterputzmontage bekannt geworden, dessen Tragrahmen an mindestens einer Seite eine kombinierte Nut-Feder-Kontur aufweist.

Des Weiteren ist es durch die EP 1 022 833 A1 bekannt, bei einem Träger für elektrische Installationsgeräte eine Leiste entlang wenigstens einer ihrer Längsränder anzuordnen, welche Einsteckmittel aufweist, die es ermöglichen, die Leiste auf den Träger aufzusetzen und den Träger eines weiteren elektrischen Installationsgerätes anzukoppeln.

Der vorliegenden Erfindung liegt daher die Aufgabe zugrunde, ein elektrisches/elektronisches Installationsgerät zu schaffen, dessen Träger bei Kopplung mit zumindest einem weiteren Träger auf einfache Art und Weise dauerhaft und sicher eine besonders exakte Ausrichtung der einander zugeordneten Installationsgeräte gewährleistet.

Die vorliegende Aufgabe wird durch die in den Patentansprüchen 1 und 2 angegebenen Merkmale gelöst.

Bei einem solchermaßen ausgebildeten Träger für elektrische/elektronische Installationsgeräte ist besonders vorteilhaft, dass das Koppelelement in der Ruheposition nicht über den Randbereich des Trägers hinaussteht, so dass das normmäßige Kantenmaß von 71 mm erhalten bleibt. Somit ist eine problemlose Kombination bzw. Kopplung auch mit anders ausgebildeten Trägern selbst innerhalb einer aus mehreren Installationsgeräten bestehenden Gerätekombination gewährleistet. Dieser Vorteil besteht auch bei dem Wunsch einer Kombination bzw. Kopplung mit bereits auf dem Markt befindlichen Trägern. Vorteilhafterweise können die Koppelelemente erst dann in ihre Wirkstellung oder in ihre Ruheposition gebracht werden, wenn sich bei der Installation herausstellt, das dies notwendig bzw. nicht störend ist. Vorteilhafterweise können die Koppelelemente bei Bedarf jederzeit auf einfache Art und Weise wieder in ihre Ruheposition oder in ihre Wirkstellung zurückgestellt werden.

Weitere vorteilhafte Ausgestaltungen des erfindungsgemäßen Gegenstandes sind in den Unteransprüchen angegeben. Anhand zweier in den Zeichnungen dargestellter Ausführungsbeispiele sei die Erfindung im Prinzip näher erläutert, dabei zeigen:
- Fig. 1:: prinziphaft ein erstes Ausführungsbeispiel eines solchen Installationsgerätes mit Träger;
- Fig. 2:: prinziphaft das Detail A gemäß Fig. 1 in vergrößerter Darstellung;
- Fig. 3:: prinziphaft ein zweites Ausführungsbeispiel eines solchen Installationsgerätes mit Träger;
- Fig. 4:: prinziphaft das Detail B gemäß Fig. 3 in vergrößerter Darstellung;
- Fig. 5:: prinziphaft ein drittes Ausführungsbeispiel eines solchen Installationsgerätes mit Träger.

Wie aus den Figuren hervorgeht, weist ein solches elektrisches/elektronisches Installationsgerät, wie Schutzkontaktsteckdose, Schalter, Taster, Bewegungsmelder und dergleichen zur sicheren und positionsgerechten Installation einen Träger 1 auf, wobei der Träger 1 in zumindest einer seiner äußeren Kantenbereiche mit zumindest einer Ausnehmung 2 und einem einstückig angeformten Koppelelement 3 versehen ist. Das Koppelelement 3 kann entweder auf besonders einfache Art und Weise von einer Ruheposition in eine Wirkstellung oder von einer Wirkstellung in eine Ruheposition gebracht werden. Zum Zwecke einer Schraubbefestigung ist der Träger 1 gegebenenfalls mit vier Langlöchern 4 versehen.

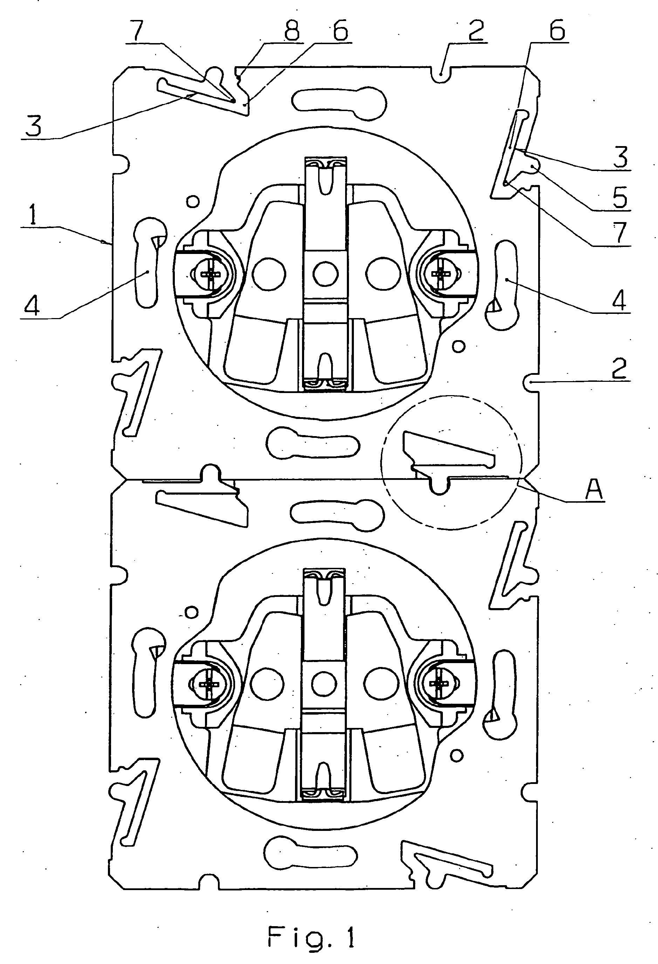

Wie insbesondere aus Figur 1 hervorgeht, ist das Installationsgerät als Schutzkontaktsteckdose ausgeführt und der Träger 1 als Tragring ausgebildet. In jeden der vier äußeren Kantenbereiche des Trägers 1 ist jeweils eine Ausnehmung 2 eingeformt. Außerdem ist in jeden der vier äußeren Kantenbereiche des Trägers 1 ein Koppelelement 3 eingeformt, welches sich direkt nach dem Herstellungsvorgang in seiner Ruhestellung befindet. Die vier Koppelelemente 3 sind jeweils als einseitig an den Träger 1 angebundene Hebel ausgeführt und jeweils einstückig mit einem Koppelzapfen 5 versehen. Die vier Koppelelemente 3 sind jeweils derart freigeschnitten, so dass diese bei Bedarf durch eine Schwenkbewegung ausgehend einer Ruheposition in eine Wirkstellung verstellt werden können. Zu diesem Zweck kann z. B. ein Schraubendreher benutzt werden, welcher zunächst mit seiner Klinge in den schlitzartigen Freiraum 6 des Freischnittes gesteckt wird, um dann danach durch eine Drehbewegung das Koppelelement 3 auf einfache Art und Weise in seine Wirkstellung zu verschwenken. In seiner Wirkstellung greift der Koppelzapfen 5 des betreffenden Koppelelementes 3 formschlüssig in die Ausnehmung 2 des zugeordneten weiteren Trägers 1 ein. Gleichzeitig greift das in seiner Wirkstellung befindliche Koppelelement 3 des weiteren Trägers 1 mit seinem Koppelzapfen 5 formschlüssig in die Ausnehmung 2 des zugeordneten Trägers 1 ein. Somit ist dauerhaft und sicher auf einfache Art und Weise eine besonders exakte Ausrichtung der einander zugeordneten Installationsgeräte bzw. Träger 1 bzw. weitere Träger 1 gewährleistet.

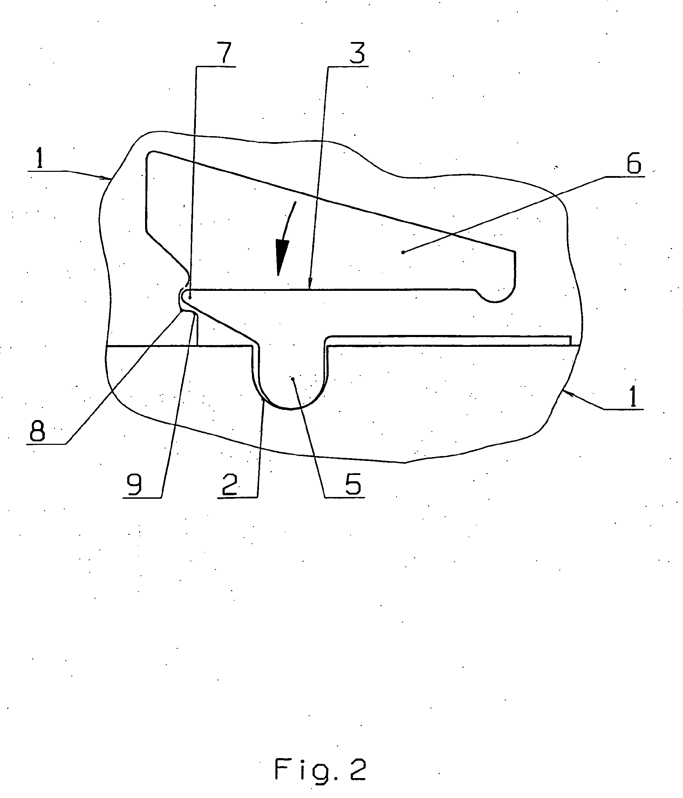

Wie insbesondere aus Figur 2 hervorgeht, ist an die freien Endbereiche der Koppelelemente 3 jeweils eine Rastnase 7 angeformt, welche in der Wirkstellung des Koppelelementes 3 jeweils rastend mit einer am Träger 1 vorhandenen Rastausnehmung 8 in Eingriff kommt. Das Koppelelement 3 kommt dabei an einem Anschlag 9 zur Anlage, damit es nicht zu weit herausgestellt werden kann. Auf diese Art und Weise sind die Koppelelemente 3 bei Bedarf jeweils sicher in ihrer Wirkstellung festlegbar. Jedes Koppelelement 3 kann jedoch bei Bedarf unter Aufbietung einer höheren Krafteinwirkung wieder aus seiner Verrastung gelöst und in seine Ruheposition zurückgedrückt werden.

Wie des weiteren insbesondere aus Figur 1 hervorgeht, steht jedes Koppelelement 3 nur dann über den äußeren Kantenbereich des Trägers 1 bzw. weiteren Trägers 1 hinaus, wenn es in seine Wirkstellung gebracht worden ist.

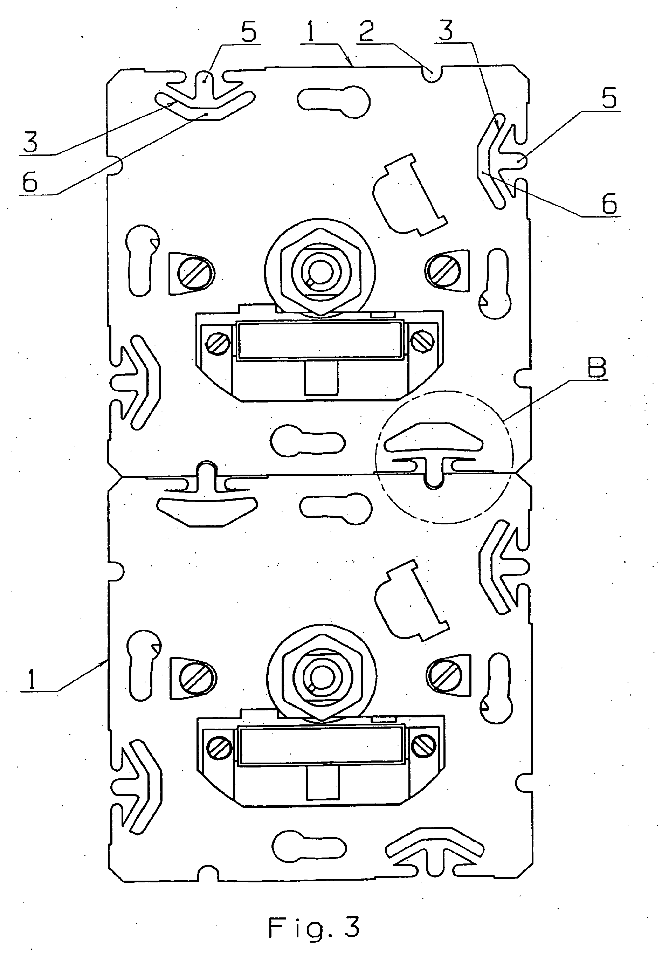

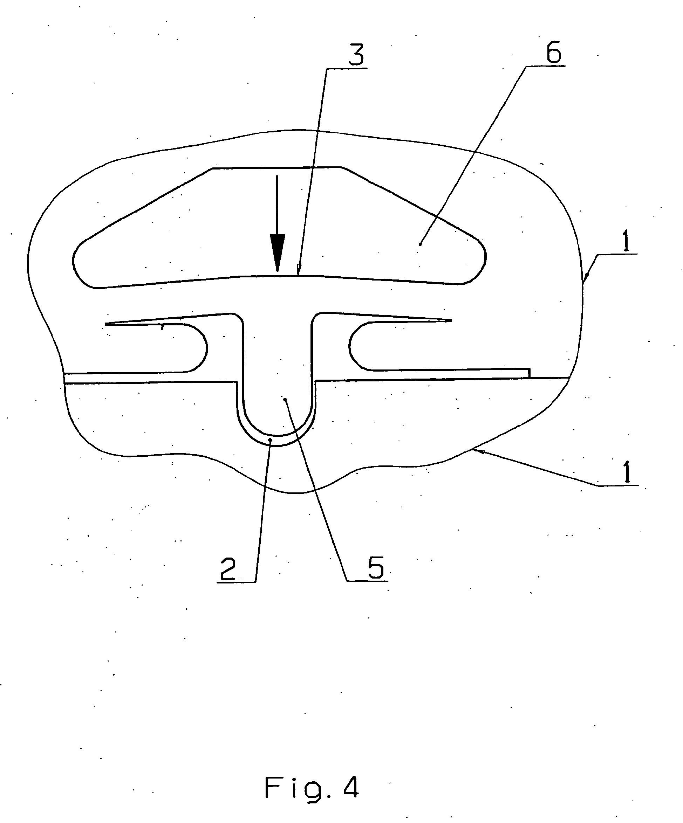

Wie insbesondere aus Figur 3 und Fig. 4 hervorgeht, ist das Installationsgerät als Dimmer ausgeführt und der Träger 1 als Tragplatte ausgebildet. In jeden der vier äußeren Kantenbereiche des Trägers 1 ist jeweils eine Ausnehmung 2 eingeformt. Außerdem ist in jeden der vier äußeren Kantenbereiche des Trägers 1 ein Koppelelement 3 eingeformt, welches sich direkt nach dem Herstellungsvorgang in seiner Ruhestellung befindet. Die vier Koppelelemente 3 sind jeweils als zweiseitig an den Träger 1 angebundene Stege ausgeführt und jeweils einstückig mit einem Koppelzapfen 5 versehen. Die vier Koppelelemente 3 sind jeweils derart freigeschnitten, so dass diese bei Bedarf durch eine Hubbewegung ausgehend einer Ruheposition in eine Wirkstellung verstellt werden können. Zu diesem Zweck kann z.B. ein Schraubendreher benutzt werden, welcher zunächst mit seiner Klinge in den schlitzartigen Freiraum 6 des Freischnittes gesteckt wird, um dann danach durch eine Drehbewegung das Koppelelement 3 auf einfache Art und Weise in seine Wirkstellung zu verstellen. In seiner Wirkstellung greift der Koppelzapfen 5 des betreffenden Koppelelementes 3 formschlüssig in die Ausnehmung 2 des zugeordneten weiteren Trägers 1 ein. Gleichzeitig greift das in seiner Wirkstellung befindliche Koppelelement 3 des weiteren Trägers 1 mit seinem Koppelzapfen 5 formschlüssig in die Ausnehmung 2 des zugeordneten Trägers 1 ein. Somit ist dauerhaft und sicher auf einfache Art und Weise eine besonders exakte Ausrichtung der einander zugeordneten Installationsgeräte bzw. Träger 1 bzw. weitere Träger 1 gewährleistet. Jedes Koppelelement 3 kann jedoch bei Bedarf wieder in seine Ruheposition zurückgedrückt werden.

Wie des weiteren insbesondere aus Figur 3 hervorgeht, steht jedes Koppelelement 3 nur dann über den äußeren Kantenbereich des Trägers 1 bzw. weiteren Trägers 1 hinaus, wenn es in seine Wirkstellung gebracht worden ist.

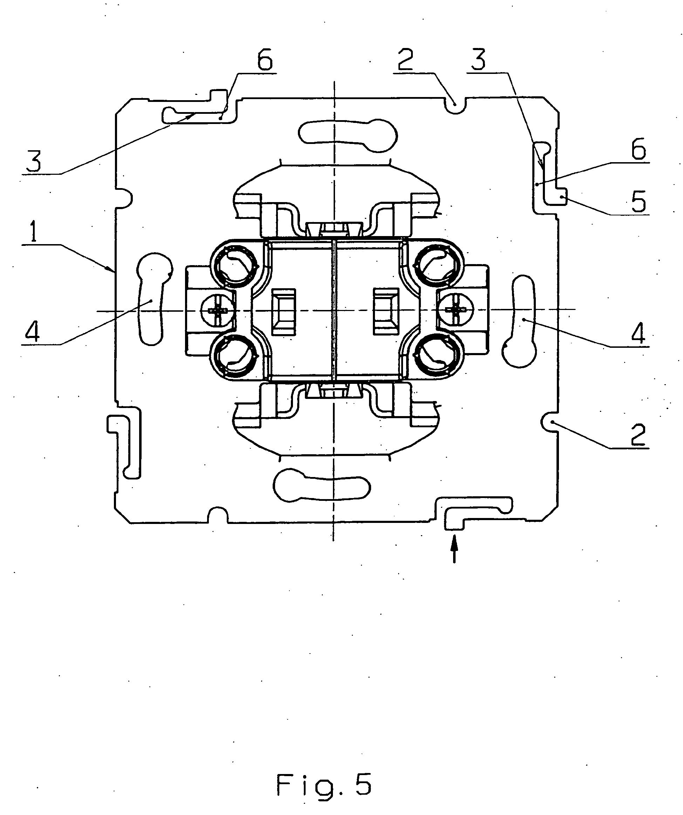

Wie insbesondere aus Figur 5 hervorgeht, ist das Installationsgerät als Schalter ausgeführt und der Träger 1 als Tragring ausgebildet. In jeden der vier äußeren Kantenbereiche des Trägers 1 ist jeweils eine Ausnehmung 2 eingeformt. Außerdem ist in jeden der vier äußeren Kantenbereiche des Trägers 1 ein Koppelelement 3 eingeformt, welches sich direkt nach dem Herstellungsvorgang in seiner Wirkstellung befindet. Die vier Koppelelemente 3 sind jeweils als einseitig an den Träger 1 angebundene Hebel ausgeführt und jeweils einstückig mit einem Koppelzapfen 5 versehen. Die vier Koppelelemente 3 sind jeweils derart freigeschnitten, so dass diese bei Bedarf ausgehend von ihrer Wirkstellung in ihre Ruheposition verstellt werden können. Zu diesem Zweck kann z. B. ein Schraubendreher oder eine Zange benutzt werden. In seiner Wirkstellung greift der Koppelzapfen 5 des betreffenden Koppelelementes 3 formschlüssig in die Ausnehmung 2 des zugeordneten weiteren Trägers 1 ein. Gleichzeitig greift das in seiner Wirkstellung befindliche Koppelelement 3 des weiteren Trägers 1 mit seinem Koppelzapfen 5 formschlüssig in die Ausnehmung 2 des zugeordneten Trägers 1 ein. Somit ist dauerhaft und sicher auf einfache Art und Weise eine besonders exakte Ausrichtung der einander zugeordneten Installationsgeräte bzw. Träger 1 bzw. weitere Träger 1 gewährleistet. Jedes Koppelelement 3 kann jedoch bei Bedarf in seine Ruheposition zurückgedrückt werden. Jedes Koppelelement 3 steht also nur dann über den äußeren Kantenbereich des Trägers 1 bzw. weiteren Trägers 1 hinaus, wenn es sich in seiner Wirkstellung befindet.

## Patentansprüche

1. Elektrisches/elektronisches Installationsgerät, wie Schutzkontaktsteckdose, Schalter, Taster, Bewegungsmelder und dergleichen mit einem zur sicheren und positionsgerechten Installation vorgesehenen Träger, wobei der Träger in zumindest einer seiner äußeren Kantenbereiche mit zumindest einer Ausnehmung versehen ist, **dadurch gekennzeichnet, dass** der Träger (1) im Bereich zumindest einer seiner äußeren Kantenbereiche zumindest ein einstückig angeformtes, ausgehend von einer Ruheposition in eine Wirkstellung oder ausgehend von einer Wirkstellung in eine Ruheposition bringbares Koppelelement (3) aufweist, wobei der Träger (1) in seinen äußeren Kantenbereichen zumindest eine Ausnehmung (2) aufweist, und dass das Koppelelement (3) in seiner Wirkstellung zur Kopplung mit einem weiteren Träger (1) formschlüssig in eine Ausnehmung (2) dieses weiteren Trägers (1) eingreift.

2. Elektrisches/elektronisches Installationsgerät nach Anspruch 1, **dadurch gekennzeichnet, dass** das einstückig an den Träger (1) angeformte Koppelelement (3) zumindest einen Koppelzapfen (5) aufweist.

3. Elektrisches/elektronisches Installationsgerät nach einem der Ansprüche 1 oder 2, **dadurch gekennzeichnet, dass** zumindest ein Koppelelement (3) als einseitig an den Träger (1) angebundener Hebel ausgeführt ist.

4. Elektrisches/elektronisches Installationsgerät nach einem der Ansprüche 1 bis 3, **dadurch gekennzeichnet, dass** zumindest ein Koppelelement (3) als zweiseitig an den Träger (1) angebundener Steg ausgeführt ist.

5. Elektrisches/elektronisches Installationsgerät nach einem der Ansprüche 1 bis 4, **dadurch gekennzeichnet, dass** an zumindest ein Koppelelement (3) eine Rastnase (7) angeformt ist, welche in der Wirkstellung des Koppelelement (3) rastend in eine im Träger (1) vorhandene Rastausnehmung (8) eingreift.

6. Elektrisches/elektronisches Installationsgerät nach einem der Ansprüche 1 bis 5, **dadurch gekennzeichnet, dass** zumindest ein Träger (1) als Tragplatte ausgebildet ist.

7. Elektrisches/elektronisches Installationsgerät nach einem der Ansprüche 1 bis 6, **dadurch gekennzeichnet, dass** zumindest ein Träger (1) als Tragring ausgebildet ist.

8. Elektrisches/elektronisches Installationsgerät nach einem der Ansprüche 1 bis 7, **dadurch gekennzeichnet, dass** das Koppelelement (3) in seiner Wirkstellung an einem Anschlag (9) zur Anlage kommt.

## Claims

1. Electrical/electronic installation device, such as socket outlet with earthing contact, switch, push-button, movement detector and the like, having a support provided for ensuring reliable, correctly-positioned installation, the support being provided with at least one recess in at least one of its outer edge zones, **characterised in that**, in the area of at least one of its outer edge zones, the support (1) has at least one integrally moulded-on coupling element (3) which can be brought into an operated position starting from a home position and into a home position starting from an operated position, whereby the support (1) has at least one recess (2) in its outer edge zones and that, for the purpose of coupling with a further support (1), the coupling element (3) in its operated position engages in an interlocking manner in a recess of this additional support (1).

2. Electrical/electronic installation device according to Claim 1, **characterised in that** the coupling element (3) which is integrally formed onto the support (1) has at least one coupling pin (5).

3. Electrical/electronic installation device according to Claim 1 or Claim 2, **characterised in that** at least one coupling element (3) is designed as a lever which is unilaterally attached to the support (1).

4. Electrical/electronic installation device according to any of Claims 1 to 3, **characterised in that** at least one coupling element (3) is designed as a web which is bilaterally attached to the support (1).

5. Electrical/electronic installation device according to any of Claims 1 to 4, **characterised in that** a locking catch (7) is formed onto at least one coupling element (3) which in the operated position of the coupling element (3) engages in a latching manner in a snap-in recess (8) provided in the support (1).

6. Electrical/electronic installation device according to any of Claims 1 to 5, **characterised in that** at least one support (1) is designed as a supporting panel.

7. Electrical/electronic installation device according to any of Claims 1 to 6, **characterised in that** at least one support (1) is designed as a support ring.

8. Electrical/electronic installation device according to any of Claims 1 to 7, **characterised in that** in its operated position the coupling element (3) comes to rest on a limit stop (9).

## Revendications

1. Appareil d'installation électrique/électronique, tel qu'une prise de courant femelle à contact de protection prise de terre, un commutateur, une touche, un détecteur de mouvement et autres appareils semblables, comportant un support destiné à une installation sûre et adaptée au positionnement de l'appareil, ce support présentant, dans le domaine d'au moins un de ses bords ou arêtes extérieur(e)s, au moins un évidement, **caractérisé en ce que** le support (1) présente dans le domaine d'au moins un de ses bords ou arêtes extérieur(e)s, au moins un élément d'accouplement (3), formé en une pièce, pouvant, partant d'une position de repos, être mis dans une position active, ou, partant d'une position active, être mis en position de repos, le support (1) présentant, dans le domaine d'au moins un de ses bords ou arêtes extérieur(e)s, au moins un évidement (2), et **en ce que** l'élément d'accouplement (3), en position active, prend, pour s'accoupler à un autre support (1), par complémentarité de forme dans un évidement (2) de cet autre support (1)

2. Appareil d'installation électrique/électronique selon la revendication 1, **caractérisé en ce que** l'élément d'accouplement (3), formé en une pièce sur le support (1), présente au moins un tenon d'accouplement (5).

3. Appareil d'installation électrique/électronique selon l'une des revendications 1 ou 2, **caractérisé en ce que** au moins un élément d'accouplement (3) est réalisé sous forme de levier relié, pris ou attaché de manière unilatérale au support (1).

4. Appareil d'installation électrique/électronique selon l'une des revendications 1 à 3, **caractérisé en ce que** au moins un élément d'accouplement (3) est réalisé sous forme de baguette reliée, prise ou attachée de manière bilatérale au support (1).

5. Appareil d'installation électrique/électronique selon l'une des revendications 1 à 4, **caractérisé en ce que** est formé sur au moins un élément d'accouplement (3) un ergot (7), lequel, lorsque l'élément d'accouplement (3) est en position active, prend dans un évidement d'encliquetage (8) situé dans le support (1).

6. Appareil d'installation électrique/électronique selon l'une des revendications 1 à 5, **caractérisé en ce que** au moins un support (1) est réalisé sous forme de plaque support.

7. Appareil d'installation électrique/électronique selon l'une des revendications 1 à 6, **caractérisé en ce que** au moins un support (1) est réalisé sous forme d'anneau support.

8. Appareil d'installation électrique/électronique selon l'une des revendications 1 à 7, **caractérisé en ce que** l'élément d'accouplement (3), en position active, vient s'appuyer contre une butée (9).
